# EUROPÄISCHE PATENTANMELDUNG

(11) **EP 2 805 851 A1**
(43) Veröffentlichungstag der Anmeldung: **26.11.2014**
(21) Anmeldenummer: 13168852.5
(22) Anmeldetag: 23.05.2013
(51) Int. Cl.: B60N 3/00, A47B 5/04

(54) **Klapptisch für Fahrzeuge**

(71) Anmelder: Wißmann, Bernhard, 46284 Dorsten (DE); Wißmann, Johannes, 46325 Borken (DE); Wißmann, Wilhelm, 46284 Dorsten (DE)
(72) Erfinder: Wißmann, Bernhard, 46284 Dorsten (DE); Wißmann, Johannes, 46325 Borken (DE); Wißmann, Wilhelm, 46284 Dorsten (DE)
(74) Vertreter: Zenz

(57) **Zusammenfassung**

Ein klappbarer Tisch zur Wandmontage wird offenbart. Ein metallisches Trägerprofil ist mit einem Befestigungsabschnitt an einer Wand derart festlegbar ist, dass eine vertikale Anlagefläche des Befestigungsabschnitts an der Wand anliegt.

An dem Trägerprofil ist ein Stützabschnitt ausgebildet, der sich von dem Befestigungsabschnitt zu einer der Anlagefläche abgewandten Seite erstreckt, an seiner oberen Begrenzung befindet sich eine horizontale Lastfläche.

In vertikaler Richtung nach oben und horizontal in Richtung der wandseitigen Anlagefläche versetzt ist ein Anschlag an dem Trägerprofil ausgebildet. Eine Tischplatte ist vorgesehen, deren Stärke dem vertikalen Abstand zwischen der Lastfläche und dem Anschlag entspricht. Zwischen der Lastfläche und dem Anschlag ist ein Freiraum ausgebildet, der in horizontaler Richtung mindestens so groß ist wie die Stärke der Tischplatte.

Die Tischplatte ist mit dem Trägerprofil derart schwenkbar verbunden, dass sich ein kürzerer Abschnitt der Tischplatte im Freiraum zwischen Anschlag und Lastfläche zwischen zwei Endlagen verschwenken lässt, wobei in der ersten Lage die Tischplatte mit einer ersten Plattenseite auf der Lastfläche aufliegt und mit einer abgewandten Plattenseite am Anschlag anliegt und der längere Abschnitt der Tischplatte sich in horizontaler Richtung erstreckt. In der zweiten Lage ist die Tischplatte in einer vertikalen Ausrichtung in dem Freiraum zwischen Lastfläche und Anschlag angeordnet, so dass sich der längere Abschnitt der Tischplatte in vertikaler Richtung von dem Trägerprofil erstreckt.

## Beschreibung

Die Erfindung betrifft einen klappbaren Tisch. Insbesondere betrifft die Erfindung einen klappbaren Tisch, der zur Wandmontage in Fahrzeugen für den Personentransport, insbesondere Wagons von Schienenfahrzeugen ausgebildet ist.

Im Stand der Technik sind Klapptische bekannt, bei denen wandseitig eine Tischplatte an einem Scharnier befestigt ist und die ausgeklappte Tischplatte mit einem Stützelement, beispielsweise einer Strebe oder einem Winkel im ausgeklappten Zustand abgestützt wird. Die DE3624156C1 offenbart einen solchen Klapptisch für Fahrzeuge. Diese Tische sind jedoch zur bedarfsgemäßen Betätigung durch einen Passagier ausgelegt und weisen regelmäßig keine hohe Stabilität auf.

Klapptische, die zur Anbringung in Fahrzeugen ausgebildet sind, gibt es im Stand der Technik in weiteren Gestaltungen. Bei den belastbaren Modellen wird wandseitig eine Auflage für den Tisch bereitgestellt und, beabstandet von der Wand, eine zweite Auflage in Gestalt von einem oder mehreren Tischbeinen. Durch diese, entlang der Länge des Tisches versetzte Unterstützung erhält der Tisch seine notwendige Stabilität.

Für die Reinigung und Revision von Personentransportfahrzeugen stellen diese Tische ein Problem dar, da um die Tischbeine herum gesäubert werden muss und bei der Revision ein Tisch vollständig abmontiert werden muss.

Aufgabe der Erfindung ist es, einen verbesserten Tisch bereitzustellen, der eine komfortable Beinfreiheit und Zugänglichkeit für Passagiere aufweist und außerdem eine einfache Reinigung und Revision eines Fahrzeuginnenraumes erlaubt, in welchem der Tisch montiert ist.

Die Aufgabe wird gelöst mit einem klappbaren Tisch gemäß Patentanspruch 1.

Der klappbare Tisch gemäß der Erfindung ist für die Wandmontage ausgelegt. Dazu weist der Tisch ein Trägerprofil auf, das über einen Befestigungsabschnitt an einer Wand festlegbar ist. Bei der Festlegung des Befestigungsabschnittes mit Hilfe von Verbindungsmitteln, insbesondere mittels einer Schraubverbindung wird eine Anlagefläche des Befestigungsabschnittes an der Wand angeordnet, so dass sich nach Befestigung das Trägerprofil mit dem Befestigungsabschnitt an der Wand anliegend abstützt. Die Wand nimmt bei dem erfindungsgemäßen Klapptisch die gesamte Last auf, die auf den Tisch wirkt.

In diesem Zusammenhang wird angemerkt, dass es sich bei der Wand im Rahmen dieser Beschreibung um eine vertikale Wand handelt. Abweichungen gegenüber der vertikalen, die bei Schienenfahrzeugen oder Passagierkabinen von anderen Fahrzeugen vorkommen können, sollen jedoch mit umfasst sein (beispielsweise Abschnitte von Fahrgastzellen, die ggf. leicht bogenförmig gestaltet sind). Insbesondere ist mit Befestigung an der Wand auch gemeint, dass die Wand entsprechende Montageschienen (C-Schienen) oder Montagevorrichtungen aufweist, die mit dem Begriff Wand als zur Wand gehörig ebenfalls umfasst sein sollen.

Erfindungsgemäß weist der Tisch an dem Trägerprofil einen Stützabschnitt auf. Der Stützabschnitt erstreckt sich am Trägerprofil von dem Befestigungsabschnitt, der an der Wand angeordnet ist, zu einer der Wand abgewandten Seite hin. Der Stützabschnitt ragt also in einen Bereich, in dem die Nutzfläche (Tischplatte) des Tisches angeordnet ist. Der Stützabschnitt ragt also in den Raum vor der Wand hinein. Der Stützabschnitt ist dabei als Stütze für eine Tischplatte ausgebildet und weist dafür an seiner oberen Begrenzung eine horizontale Lastfläche auf. Die horizontale Lastfläche ist von der Wand weg, zur Nutzfläche des Tisches hin versetzt.

Ausgehend von der horizontalen Lastfläche des Stützabschnittes ist wiederum in einer Richtung, die der späteren Nutzfläche des Tisches abgewandt ist, also in Richtung des Befestigungsabschnitts und dessen Anlagefläche zur Wand hin ein Anschlag an dem Trägerprofil ausgebildet. Dieser Anschlag dient der Abstützung der Tischplatte. Die Tischplatte ist dabei, zumindest im Endabschnitt, welcher mit dem Profil in Kontakt kommt, mit einer Stärke ausgebildet, die dem vertikalen Abstand zwischen der Lastfläche und dem Anschlag entspricht.

Im ausgeklappten Zustand ist die Tischplatte mit einem wandnahen (proximalen) Ende auf die Lastfläche des Stützabschnittes aufgelegt und außerdem an dem Anschlag des Trägerprofiles angelegt. Das distale Ende, also das dem Trägerprofil abgewandte Ende der Tischplatte ist freitragend. Die Tischplatte ist damit im ausgeklappten Zustand auf der Lastfläche und unter dem Anschlag nach einem Cantilever-Prinzip eingespannt. Ein Abkippen der Tischplatte wird durch den Anschlag verhindert und eine auf die Tischplatte wirkende Last wird über die Lastfläche in den Stützabschnitt und in das Trägerprofil eingeleitet und schließlich über den Befestigungsabschnitt in die Wand geleitet.

Es ist an dieser Stelle zu betonen, dass diese Halterung der Tischplatte die alleinige Lastaufnahme für vertikale Lasten auf der Tischplatte ist. Der klappbare Tisch kommt also gänzlich ohne weitere, wandferne Unterstützungen (z.B. Tischbeine) aus.

Außerdem ist zwischen der Lastfläche, die den ausgeklappten Tisch an dessen proximalen Ende der Tischplatte unterstützt und dem Anschlag ein Freiraum ausgebildet, der in horizontaler Richtung mindestens so groß ist wie die Stärke der Tischplatte. Dieser Freiraum nimmt bei hochgeklapptem Tisch das proximale Ende Tischplatte in vertikaler Ausrichtung auf. Um die Klappung aus der Stellung, in welcher die Tischplatte nach dem Cantilever-Prinzip zwischen Anschlag und Lastfläche verspannt ist und der vertikalen Orientierung, in welcher die Tischplatte zwischen Lastfläche und Anschlag in der Vertikalen ruht, zu ermöglichen, ist das Trägerprofil mit der Tischplatte schwenkbar verbunden. Diese schwenkbare Verbindung ist derart ausgebildet, dass sich der proximale Endabschnitt als kürzerer Abschnitt der Tischplatte im Freiraum zwischen Anschlag und Lastfläche zwischen zwei Endlagen verschwenken lässt. Die schwenkbare Anlenkung ist also derart an der Tischplatte angebracht, dass zwei stark unterschiedlich lange Schwenkarme gebildet sind. Der kurze, proximale Schwenkarm ist dabei der Teil, der wandnah zwischen Anschlag des Trägerprofils und der Lastfläche angeordnet ist. Grundsätzlich sind als schwenkbare Verbindungsmittel Scharniere möglich, insbesondere ist es jedoch vorgesehen, ein Zapfenband oder eine Verbindung nach Zapfenbandprinzip zu verwenden, welches die Tischplatte schwenkbar an dem Trägerprofil befestigt. Wesentlich ist, dass aufgrund der Lage der schwenkbaren Verbindungmittel zwischen Lastfläche und Anschlag, zwischen denen die Tischplatte verspannbar ist, eine nahezu vollständige Entlastung der schwenkbaren Verbindungmittel stattfindet. Die Verbindungsmittel, z.B. ein Zapfenband, legen nur die Schwenkachse fest und führen die Platte beim Verschwenken. In der stabilen Endlage wird die Last nur auf Lastfläche und Anschlag verteilt.

Der erfindungsgemäße Tisch weist also zwei stabile Lagen bezüglich der Tischplatte auf. In einer Nutzlage ist die Tischplatte mit ihrer Längserstreckung in der Horizontalen ausgerichtet, ein Abschnitt der Unterseite der Tischplatte liegt auf der Lastfläche des Stützabschnittes vom Trägerprofil auf und ein Abschnitt der Tischplatte, der gegenüber diesem unterstützten Abschnitt zur Wand hin versetzt ist, liegt an dem Anschlag des Trägerprofils an. Vorzugsweise untergreift dieser letzgenannte Abschnitt der Tischplatte den Anschlag, so dass der Tisch mit seiner Tischplatte freitragend von der Wand absteht und nur im wandseitigen Endabschnitt gehalten ist.

Es ist dem Fachmann klar, dass je nach freitragender Erstreckung der Tischplatte eine Platte aus entsprechendem Material, beispielsweise aus einem holzbasierten Multiplexmaterial oder einem entsprechend stabilen Kunststoff zu bilden ist, um die erforderliche Eigenstabilität bereitzustellen.

Zur Reinigung oder Revision kann die Tischplatte gegenüber dem Trägerprofil nach oben verschwenkt werden, in eine vertikale Orientierung. Der wandseitige proximale Abschnitt schwenkt im Freiraum zwischen Anschlag und Lastfläche und erlaubt es, die Tischplatte gänzlich nach oben in die Vertikale zu verschwenken. In dieser Stellung kann eine Raste vorgesehen sein, die ein unbeabsichtigtes Herunterklappen der Tischplatte verhindert.

Dies hat den Vorteil, dass gegenüber Tischen, die eine Abklappung einer Tischplatte nach unten erlauben, der Bodenbereich gänzlich zugänglich bleibt und die Tischplatte nicht in Kontakt mit Bodenschmitz oder bodennahen Verunreinigungen gerät (die Nutzfläche wird ja nach oben und zur Wand hin geklappt und ist entsprechend geschützt).

Es ist unmittelbar ersichtlich, dass durch den Wegfall der wandfernen Stützen, insbesondere der Beine des Tisches eine sehr gute Zugänglichkeit der Tischfläche und des Bereichs unterhalb des Tisches für die Passagiere gegeben ist. Eine Verletzung der Füße oder Beine eines Passagiers beim Heransetzen an den Tisch ist ausgeschlossen.

Der Fachmann wird die Ausgestaltung des Trägerprofils im Rahmen der Erfindung in Abhängigkeit von der Plattenstärke und der Plattenerstreckung wählen. Unten wird eine bevorzugte Ausführungsform beschrieben. Die Abstimmung eines derartigen Trägerprofils auf die Plattenstärke ist jedoch anhand der Lehren dieser Patentschrift mit dem gängigen Berechnungsmethoden der maschinenbaulichen Statik ermittelbar. Wesentlich ist, dass die Lastaufnahme am Stützabschnitt eine Einleitung der vertikalen Last in die Wandbefestigung erlaubt. Belastungen in horizontaler Richtung, beispielsweise also ein seitliches Drücken gegen die Tischkante des ausgeklappten Tisches, wird durch die schwenkbaren Verbindungsmittel einerseits und auch den entsprechend ausgebildeten Anschlag andererseits aufgenommen. Entsprechende Beispiele sind weiter unten dargestellt.

In einer bevorzugten Ausgestaltung der Erfindung ist das Trägerprofil mit einer Stützstruktur mit Verstrebungen derart ausgestaltet, dass Kräfte von der Lastfläche in die Anlagefläche geleitet werden. Wie bereits oben erwähnt, ist es bei einer geeigneten Einleitung der Kräfte von der Stützfläche in die Anlagefläche und die Verbindungsmittel zur Wand möglich, das Trägerprofil mit geringem Materialeinsatz und geringer Bautiefe, ausgehend von der Wand zu gestalten. Die Gestaltung der Stützstruktur kann dazu Querverstrebungen aufweisen, insbesondere jedoch auch bogenförmige lastaufnehmende Bauteile, die sich nach unten von der Lastfläche weg erstrecken.

In einer weiter bevorzugten Ausführungsform der Erfindung weist die Anlagefläche des Trägerprofils wenigstens eine Aufnahme für Befestigungsmittel zur Wandmontage auf. Zwar kann das Trägerprofil auch durch andere Verbindungsmittel mit der Wand verbunden sein, beispielsweise durch Einhängen in geeignete, lastaufnehmende Schienen, eine Befestigung durch das Trägerprofil hindurch, insbesondere durch eine Aufnahme oder Lasche ist jedoch eine bevorzugte, besonders stabile Ausgestaltung der Erfindung.

Es ist weiterhin vorteilhaft, wenn der Stützabschnitt gegenüber der Anlagefläche schräg angeordnet ist, insbesondere in einem Winkel zwischen 30° und 60° gegenüber der Vertikalen.

Zwar kann grundsätzlich der Stützabschnitt auch durch einen sich von der Wandseite in Richtung der Tischplatte wegerstreckenden Arm gebildet sein, der senkrecht zur Wandfläche verläuft, eine zur Wand schräge Anordnung oder gebogene Anordnung der Stützstruktur ist bezüglich der Anlenkung und Lastverteilung jedoch bevorzugt. Dabei ist es jedoch wichtig, dass die Lastfläche am Stützabschnitt horizontal ausgebildet ist.

Es ist weiterhin bevorzugt, dass der Stützabschnitt als Hohlprofil mit mehreren Kammern ausgebildet ist und die Lastfläche durch eine äußere Wand des Hohlprofils gebildet ist.

Die Ausgestaltung als Hohlprofil, wobei Verstrebungen das Profil in mehrere innere Kammern unterteilen, ist materialsparend und außerdem mechanisch besonders stabil. Wird das Profil derart ausgebildet, dass eine Außenwand unmittelbar die Lastfläche bildet, ist diese Gestaltung besonders stabil und materialsparend.

Vorzugsweise sind auch Teile des übrigen Trägerprofils, insbesondere der Befestigungsabschnitt, als Hohlprofil mit mehreren Kammern ausgebildet. Auch kann die Außenwand des Hohlprofils unmittelbar die Anlagefläche bilden.

In der genannten Gestaltung kann die gesamte Anordnung des Trägerprofils aus einem integralen Metallstück gebildet sein. Das Profil lässt sich so, je nach Tischplattenbreite, in passender Weise als Strangprofil fertigen, es sind lediglich noch die Verbindungsmittel für die Schwenkverbindung und die Tischplatte daran anzubringen.

Es ist an dieser Stelle klarzustellen, dass die erzielbaren stabilen Tischgrößen problemlos den erforderlichen Tischgrößen von Fahrzeugen im Personenverkehr entsprechen. Tischlängen, von der Wand aus gesehen, von 700mm bis 1500mm sind mit der erfindungsgemäßen Gestaltung als klappbare, freitragende Tische erprobt worden. Diese Tische tragen an ihrem freien Ende noch erhebliche Lasten, ohne eine Überlastung des Trägerprofils zu verursachen.

Die Erfindung wird nun anhand der beiliegenden Figuren näher erläutert.
Figur 1 zeigt eine Ausführungsform des erfindungsgemäßen Tisches im ausgeklappten Zustand in einer Seitenansicht;
Figur 2a zeigt eine Ausschnittsvergrößerung aus Figur 1 mit dem Tisch im ausgeklappten Zustand;
Figur 2b zeigt eine Ausschnittsvergrößerung aus Figur 1 mit dem Tisch im eingeklappten Zustand;
Figur 3 zeigt das Trägerprofil der ersten Ausführungsform mit zugehörigem Schwenklager und ohne Tischplatte in perspektivischer Darstellung;
Figur 4a zeigt den Tisch gemäß erstem Ausführungsbeispiel in einer perspektivischen Seitenansicht von schräg oben;
Figur 4b zeigt den Tisch gemäß erstem Ausführungsbeispiel in einer perspektivischen Seitenansicht von schräg unten;
Figur 5 zeigt eine Ausschnittsvergrößerung des Auflage- und Schwenkbereichs des Tisches gemäß erstem Ausführungsbeispiel.

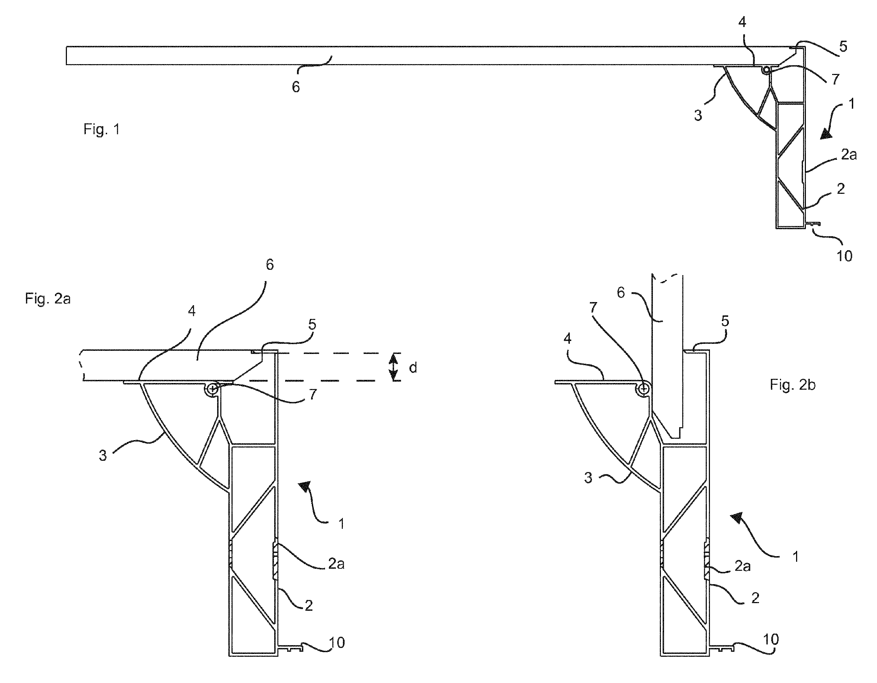

In Figur 1 ist eine Seitenansicht einer ersten Ausführungsform des klappbaren Tisches gemäß der Erfindung gezeigt.

Ein Trägerprofil 1 ist als Hohlprofil aus Aluminium ausgebildet.

An dem Trägerprofil ist eine vertikale Anlagefläche 2 ausgebildet, die im Bereich 2a eine Aufnahme für Befestigungsmittel aufweisen.

Ein Stützabschnitt 3 erstreckt sich von dem Befestigungsabschnitt 2 mit bogenförmiger Außenkontur weg und bildet an seinem oberen Ende eine Lastfläche 4 durch seine äußere Begrenzung. Ein Anschlag 5 ist als abgewinkelter Vorsprung von dem Trägerprofil 1 oberhalb der Lastfläche 4 gebildet.

Figur 2a zeigt den Bereich des Trägerprofils 1 in vergrößerter Darstellung, wobei sich der Tisch im ausgeklappten, also benutzungsfähigen Zustand befindet. Figur 2b zeigt dieselbe Anordnung, jedoch mit hochgeklapptem Tisch. Es ist ersichtlich, dass in Figur 2b der proximale, kurze Schenkel des Tisches, also der Teil zwischen gelenkiger Anbringung 7 am Trägerprofil 1 und wandseitigem Ende in dem Profil verschwenkt wurde, also in dem freien Zwischenraum zwischen dem Anschlag 5 und der Lastfläche 4. Da der freie horizontale Abstand zwischen dem Anschlag 5 und der Lastfläche 4 mindestens der Stärke der Tischplatte entspricht, ist eine vollständige Senkrechtstellung, also vertikale Ausrichtung der Tischplatte im Trägerprofil möglich. In diesem Zustand ist der gesamte Bereich unterhalb der Tischplatte zugänglich.

Die Tischplatte 6 ist über ein Zapfenband 7 mit dem Trägerprofil 1 schwenkbar gekoppelt. Die Dicke d der Tischplatte (Fig. 2a), also die Erstreckung in vertikaler Richtung entspricht im Bereich des Trägerprofiles dem vertikalen Abstand zwischen dem Anschlag 5 und der Lastfläche 4.

Die Tischplatte 6 ragt von dem Trägerprofil 1 weg in den nutzbaren Tischbereich, wobei die Tischplatte 6 in dieser Position die auf die Platte 6 wirkenden Lasten durch die Lastfläche 4 auf den Stützabschnitt 3 und in den Befestigungsabschnitt 2 und die Wand einleitet. Die Tischplatte 6 ist dabei nach einem Cantilever-Prinzip zwischen Anschlag 5 und Lastfläche 4 eingespannt. Es ist zu bemerken, dass die Gelenkverbindung 7 zwischen der Tischplatte 6 und dem Trägerprofil 1 in diesem Beispiel als Zapfenband ausgebildet ist, diese Verbindung trägt jedoch kaum einen Anteil an der einwirkenden Last durch die Tischplatte 6 selbst oder solche Lasten, die auf die Tischplatte 6 einwirken. In der gezeigten Ausführungsform ist die Aufnahme des Beschlagzapfens des Zapfenbandes bei der Profilherstellung mit angezogen, es besteht also ein stoffschlüssiger Materialverbund.

Durch das Zusammenwirken der Platte 6, der Lastfläche 4 und dem Anschlag 5 ist eine vollständige Lasteinleitung in den Befestigungsabschnitt 2 und die Wand gewährleistet, ohne die Gelenkverbindung zu belasten.

Es ist in diesem Ausführungsbeispiel erkennbar, dass eine Ausklinkung in der Tischplatte 6 vorgesehen ist, um eine fluchtende Fläche zwischen der oberen Begrenzung des Anschlages 5 und der Tischplatte herzustellen. Es ist jedoch ebenso gut möglich, die Tischplatte ohne eine derartige Ausklinkung auszubilden. Auch die Anschrägung auf der Unterseite der Tischplatte 6 im Schwenkraum ist in diesem Ausführungsbeispiel nur gewählt, um ein besonders materialsparsames Bauteil zu fertigen. Es ist nämlich erkennbar, dass durch die Profilgestaltung und die Formung der Kammergrenzen des Trägerprofils nur ein geringer Materialeinsatz erforderlich ist.

In der dargestellten Ausführungsform ist die Platte 6 gegenüber der Ausklappstellung um 90° hochzuklappen und in dieser Stellung einzurasten. Für das Herabklappen wird die Platte in eine Stellung von ca. 95° gegen die Ausklappstellung gebracht, also Richtung Wand gekippt und dann in die Ausklapplage gebracht.

In diesem Beispiel ist das Trägerprofil aus Aluminium gefertigt, um ein besonders leichtes Bauteil herzustellen. Eine Wandung des Stützabschnittes ist mit gebogener Gestaltung ausgeformt, um die Kräfte von der Lastfläche 4 bestmöglich in dem Befestigungsabschnitt 2 und von dort in die Wand einzuleiten.

Es ist ebenfalls gezeigt, dass auch der Befestigungsabschnitt 2 selbst als Hohlkammerprofil ausgebildet ist. Dies spart gegenüber der Ausbildung aus Vollmaterial sowohl Gewicht als auch Kosten. In dieser Gestaltung ist außerdem die Schwenkverbindung als Zapfenband innerhalb des Stützabschnittes 3 ausgebildet, sie könnte jedoch auch separat zum Stützabschnitt und beabstandet davon ausgebildet sein.

Schließlich ist in diesem Beispiel auch dargestellt, dass an der Lastfläche eine vorstehende Lasche ausgebildet ist. Mittels dieser Lasche kann die Platte im ausgeklappten Zustand fixiert werden, beispielsweise wenn nur für seltene Revisionen ein Hochklappen der Tischplatte erforderlich ist. Die Lasche bietet dann Aufnahmen für Befestigungsmittel, um die Tischplatte in dieser Stellung gegen Anheben zu sichern.

Es ist schließlich noch erkennbar, dass am unteren Ende des Trägerprofils ein Ansatz 10 ausgebildet ist. Zur einfachen Montage des Trägerprofils an der Wand eines Bahnwagons greift dieser Ansatz in eine vorhandene Montageschiene an der Wandseite des Bahnwagons ein. Anschließend wird das Trägerprofil 1 an der Wand mit Verbindungsmitteln lastaufnehmend befestigt.

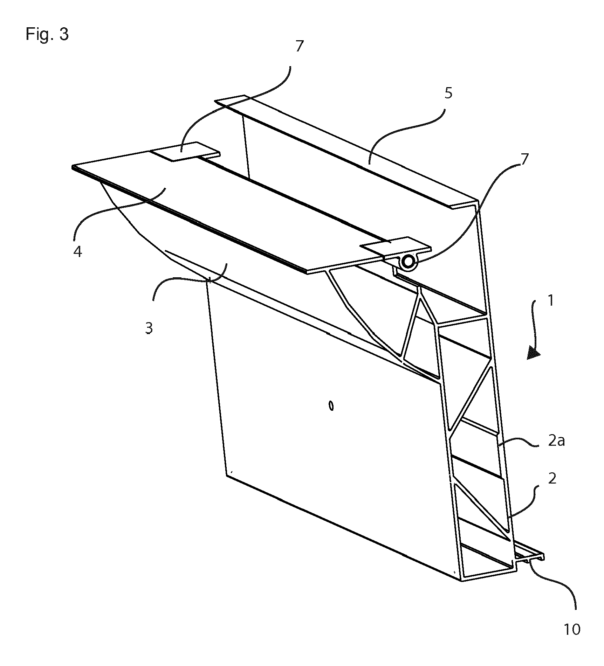

Figur 3 verdeutlicht die Gestaltung des Trägerprofils mit der Zapfenbandanordnung anhand einer Darstellung, in welcher die Tischplatte zur besseren Übersichtlichkeit entfernt wurde. Es ist erkennbar, dass das Zapfenband an seinen beidseitigen Enden Auflagen und Befestigungsmittel für die Tischplatte aufweist. Da das Zapfenband keine wesentlichen Lasten aufnehmen muss, die höher sind als das Eigengewicht der Platte beim Hochklappen, ist diese Befestigung völlig ausreichend, auch wenn der gesamte Mittelbereich der Tischplatte entlang der Schwenkachse ohne Verbindung zur Gelenkverbindung vorgesehen ist. Dies erleichtert die Montage an den Endseiten des Zapfenbandes erheblich, da im Mittelbereich der Tischplatte, also im schlecht zugänglichen Bereich keinerlei Montagehandlungen vorzunehmen sind.

Die Schwenkverbindung 7 führt lediglich die Platte zwischen der ausgeklappten und der hochgeklappten Position und sichert sie außerdem gegen ein seitliches Verkippen. Es ist an dieser Gestaltung jedoch auch erkennbar, dass dann, wenn die Tischplatte entlang des gesamten Anschlages über die ganze Tischbreite an dem Anschlag anliegt, ein seitliches Verkippen durch den Anschlag in Zusammenwirkung mit dem Zapfenband verhindert wird.

Es ist außerdem erkennbar, dass das Trägerprofil eine frontseitige Öffnung aufweist, über welche die Befestigungsmittel zur wandseitigen Befestigung zugänglich sind. Auch der verstärkte Bereich 2a ist in Figur 3 gezeigt.

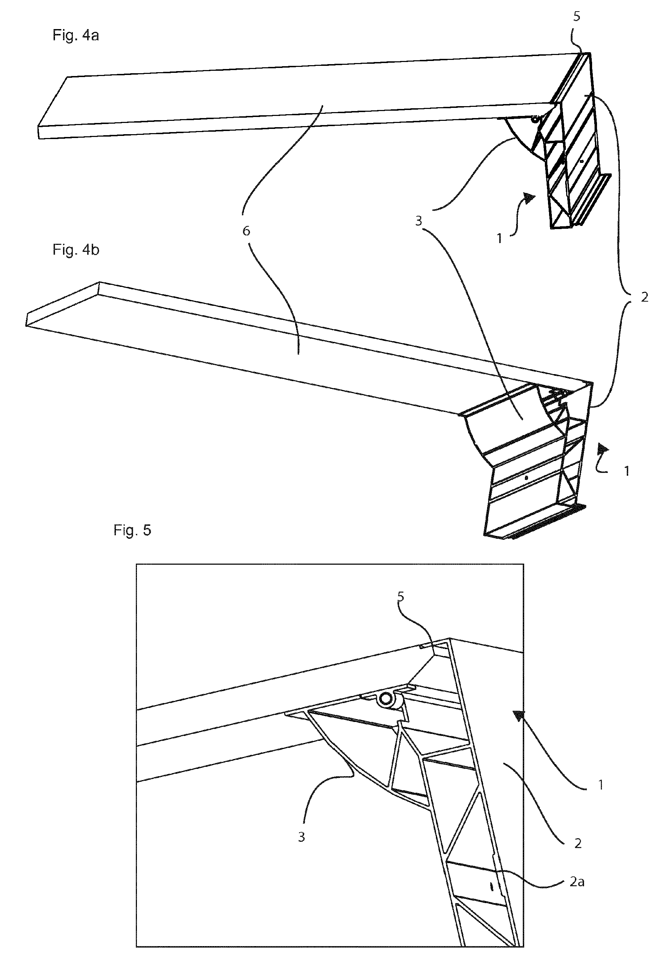

Die Figuren 4a und 4b zeigen den Tisch mit ausgeklappter Tischplatte in zwei perspektivischen Ansichten.

Figur 5 zeigt außerdem den Bereich, der bereits in den Figuren 2a und 2b gezeigt wurde in einer perspektivischen Ansicht. Dort wird das Untergreifen des Anschlages 5 durch die Tischplatte besonders deutlich, ebenso wie die Auflage der Tischplatte auf der Lastfläche 4.

Es wird außerdem gezeigt, dass der Tisch im hochgeklappten Zustand eine äußerst geringe Bautiefe aufweist. Das Trägerprofil erstreckt sich nur mit einem Bruchteil der Tiefe des gesamten Tisches in den Raum. Beispielsweise ist es möglich, eine Erstreckung des Tisches in dem Raum von 150cm zu realisieren, wobei sich das Trägerprofil nur etwa 20cm von der Wand erstreckt. Die Vorteile hinsichtlich der Zugänglichkeit des Bereiches unter dem Tisch sind dabei unmittelbar ersichtlich.

## Patentansprüche

1. Klappbarer Tisch zur Wandmontage, mit einem Trägerprofil welches einen Befestigungsabschnitt aufweist, wobei der Befestigungsabschnitt mit Verbindungsmitteln an einer Wand derart festlegbar ist, dass eine vertikale Anlagefläche des Befestigungsabschnitts an der Wand anliegt,
wobei an dem Trägerprofil ein Stützabschnitt ausgebildet ist, der sich von dem Befestigungsabschnitt zu einer der Anlagefläche abgewandten Seite erstreckt, wobei der Stützabschnitt an seiner oberen Begrenzung eine horizontale Lastfläche aufweist,
wobei gegenüber der horizontalen Lastfläche in vertikaler Richtung nach oben versetzt und horizontal in Richtung der wandseitigen Anlagefläche versetzt ein Anschlag an dem Trägerprofil ausgebildet ist,
wobei eine Tischplatte vorgesehen ist, deren Stärke dem vertikalen Abstand zwischen der Lastfläche und dem Anschlag entspricht,
wobei zwischen der Lastfläche und dem Anschlag ein Freiraum ausgebildet ist, der in horizontaler Richtung mindestens so groß ist wie die Stärke der Tischplatte,
wobei die Tischplatte mit dem Trägerprofil derart schwenkbar verbunden ist, dass sich ein kürzerer Abschnitt der Tischplatte im Freiraum zwischen Anschlag und Lastfläche zwischen zwei Endlagen verschwenken lässt,
wobei in der ersten Lage die Tischplatte mit einer ersten Plattenseite auf der Lastfläche aufliegt und mit einer abgewandten Plattenseite am Anschlag anliegt und der längere Abschnitt der Tischplatte sich in horizontaler Richtung von dem Trägerprofil auf einer der vertikalen Anlagefläche abgewandten Seite erstreckt,
wobei in der zweiten Lage die Tischplatte in einer vertikalen Ausrichtung in dem Freiraum zwischen Lastfläche und Anschlag angeordnet ist, so dass sich der längere Abschnitt der Tischplatte in vertikaler Richtung von dem Trägerprofil erstreckt.

2. Tisch nach Anspruch 1, wobei die Tischplatte mit einem Zapfenband mit dem Trägerprofil schwenkbar verbunden ist.

3. Tisch nach Anspruch 1 oder 2, wobei das Trägerprofil eine Stützstruktur mit Verstrebungen aufweist, welche Kräfte von der Lastfläche in die Anlagefläche leiten.

4. Tisch nach einem der vorangehenden Ansprüche, wobei die Anlagefläche wenigstens eine Aufnahme für Befestigungsmittel zur Wandmontage des Trägerprofils aufweist, wobei das Trägerprofil im Bereich der Aufnahme verstärkt ausgebildet ist.

5. Tisch nach einem der vorangehenden Ansprüche, wobei der Stützabschnitt gegenüber der Anlagefläche schräg angeordnet ist, vorzugsweise in einem Winkel zwischen 30° und 60° gegenüber der Vertikalen.

6. Tisch nach einem der vorangehenden Ansprüche, wobei der Stützabschnitt als Hohlprofil mit mehreren Kammern ausgebildet ist, wobei die Lastfläche durch eine äußere Wand des Hohlprofils gebildet ist.

7. Tisch nach einem der vorangehenden Ansprüche, wobei das Trägerprofil im Bereich des Befestigungsabschnitts als Hohlprofil mit mehreren Kammern gebildet ist wobei die Anlagefläche aus einer Außenwand des Hohlprofils des Trägerprofils gebildet ist.

8. Tisch nach einem der vorangehenden Ansprüche, wobei der Anschlag eine untere, horizontale Anschlagfläche aufweist, an der die Tischplatte im ausgeklappten Zustand entlang einer Kantenerstreckung der Tischplatte flächig aufliegt.

9. Tisch nach einem der vorangehenden Ansprüche, wobei Befestigungsabschnitt, Stützabschnitt und Anschlag des Trägerprofils integral aus einem Metall ausgebildet sind.

10. Tisch nach einem der vorangehenden Ansprüche, wobei die Tischplatte derart angeordnet ist, dass der längere, auskragende Abschnitt der Tischplatte wenigstens fünfmal, vorzugsweise zehnmal so lang ist wie der kürzere Abschnitt der Tischplatte.
